# FASCICULE DE BREVET EUROPEEN

(11) **EP 0 865 312 B1**
(45) Date de publication et mention de la délivrance du brevet: **25.08.1999**
(21) Numéro de dépôt: 96934957.0
(22) Date de dépôt: 23.10.1996
(51) Int. Cl.: B01J 2/04

(54) **GRANULES REDISPERSABLES DANS L'EAU COMPRENANT UNE MATIERE ACTIVE SOUS FORME LIQUIDE ET UN TENSIO-ACTIF DU TYPE SULFONATE**
IN WASSER REDISPERGIERBARE GRANULATE ENTHALTEND FLÜSSIGEN AKTIVSTOFF UND IONISCHEN TENSID VOM SULFONAT-TYP
WATER-REDISPERSIBLE GRANULES INCLUDING A LIQUID ACTIVE MATERIAL AND A SULPHONATE-TYPE SURFACTANT

(30) Priorité: 25.10.1995 FR 9512587
(43) Date de publication de la demande: 23.09.1998
(73) Titulaire: RHODIA CHIMIE, 92408 Courbevoie Cédex (FR)
(72) Inventeur: GUERIN, Gilles, F-95600 Eaubonne (FR); MORVAN, Mikel, F-92400 Courbevoie (FR)
(74) Mandataire: Wattremez, Catherine
(86) Numéro de dépôt international: FR9601655
(87) Numéro de publication internationale: WO9715387

(56) Documents cités:
- WO-A-94/09058
- US-A- 4 814 376
- DATABASE WPI Derwent Publications Ltd., London, GB; AN 81-50852d XP002008139 & JP,A,56 061 497 (NIPPON SURFACTANT KK) , 26 Mai 1981
- DATABASE WPI Derwent Publications Ltd., London, GB; AN 93-330525 XP002008140 & JP,A,05 236 886 (LION CORP) , 17 Septembre 1993

## Description

La présente invention a pour objet des granulés redispersables dans l'eau comprenant une matière active sous forme liquide, leur procédé de préparation et leur utilisation.

Dans certains domaines, comme par exemple ceux de l'alimentaire,de la cosmétique ou des peintures, on est conduit a préparer des formulations à partir de matières actives sous la forme de liquide hydrophobe. L'une des possibilités de formulation est de préparer des émulsions huile dans eau de telles matières.

Cependant, on se trouve en face de problèmes liés a la stabilité au stockage de ces émulsions. En effet, il est courant de constater une séparation de phases plus ou moins importante des constituants de l'émulsion. En outre, on peut être confronté a des problèmes de désactivation de la matière active, ladite matière active pouvant se dégrader par hydrolyse lors du stockage.

Enfin, il n'est pas à négliger le fait que pour être facilement manipulable et pompable de telles formulations présentent des teneurs relativement peu élevées en matière active et une quantité d'eau importante.

La présente invention a donc pour objectif de proposer une alternative originale aux problèmes mentionnés ci-dessus en ce sens que les formulations proposées sont des poudres contenant des concentrations élevées en matière active initialement sous forme de liquide hydrophobe.

Ainsi, elle a pour objet des granulés redispersables dans l'eau comprenant :
- au moins une matière active sous forme de liquide hydrophobe,
- au moins un tensio-actif ionique choisi parmi les acides alkylsulfoniques, les alkylarylsulfoniques, partiellement ou totalement salifiés, ou leurs mélanges,
- au moins un composé hydrosoluble choisi parmi les sucres et leurs dérivés.

L'invention a de même pour objet un procédé de préparation de tels granulés consistant à mettre en oeuvre les étapes suivantes :
- on prépare une émulsion dans l'eau d'au moins une matière active, d'au moins un tensio-actif ionique, d'au moins un composé hydrosoluble,
- on sèche l'émulsion ainsi obtenue.

Les granulés selon la présente invention présentent de nombreux avantages.

Tout d'abord, leur mise en forme permet d'éviter tous les problèmes dus à l'emploi d'émulsions. Ainsi, les problèmes d'instabilité au stockage sont évités, tels que notamment le crémage, la floculation, le mûrissement et la coalescence. Ces différents phénomènes sont décrits dans "ENCYCLOPEDIA of EMULSIONS TECHNOLOGY", volume 1 par Paul BECHER aux éditions MARCEL DEKKER INC., 1983.

Un autre avantage de la présente invention est que les concentrations en matières actives peuvent être très élevées en comparaison avec les émulsions. Par conséquent, lors de l'utilisation de ces granulés, une plus faible quantité de granulés sera suffisante.

Par ailleurs, la mise en forme selon l'invention permet de résoudre le problème de la désactivation de la matière active lorsque celle-ci est sensible à l'hydrolyse.

La présente invention permet aussi de disposer d'une préformulation sous forme de granulés, donc plus facilement utilisable que des émulsions par exemple dans le cas où ladite préformulation est ajoutée à une formulation en poudre. En outre, les granulés selon l'invention, préparés à partir d'une émulsion, présentent l'avantage de se redisperser spontanément dans l'eau, pour donner à nouveau une émulsion présentant une granulométrie voisine de celle de l'émulsion initiale.

Enfin, la présente invention propose une solution aux problèmes de la mise en forme de produits liquides qui sont habituellement formulés par absorption sur un support. Ces formulations sont souvent peu concentrées en matière active et il peut se produire une séparation de phases entre le support et la matière active par migration de la matière active au cours du stockage.

Mais d'autres avantages et caractéristiques apparaîtront plus clairement à la lecture de la description et des exemples qui vont suivre.

Ainsi que cela a été indiqué auparavant, les granulés selon l'invention comprennent au moins une matière active sous la forme d'un liquide hydrophobe.

Toutes les matières actives conviennent à l'invention dans la mesure où elles se présentent à température ambiante sous forme de liquide non miscible ou très faiblement miscible dans l'eau ou sous une forme solubilisée dans un solvant organique. Par faiblement miscible, on entend des matières actives dont la solubilité dans l'eau ne dépasse pas 10 % en poids.

Par la suite, on entendra par matière active, soit la matière active pure, soit la matière active solubilisée dans un solvant, soit un solvant.

A titre d'exemple de matières actives dans le domaine de l'alimentaire, on peut citer les mono-, di- et triglycérides, les huiles essentielles, les arômes, les colorants.

A titre d'exemple de matières actives convenables pour la réalisation de l'invention, dans le domaine des peintures, on peut citer les résines alkydes, les résines époxy, les isocyanates bloqués ou non.

A titre d'exemple de matières actives dans le domaine de la cosmétique on peut citer les huiles silicones appartenant par exemple à la famille des diméthicones.

Dans le domaine du papier, on peut citer à titre d'exemple les résines de collage et d'hydrofugation telles que le dimère d'alkylcétène (AKD) ou l'anhydride alcényle succinique (ASA).

Dans le domaine de la détergence, on peut mentionner en tant que matière active possible les antimousses silicones.

Il est de même possible d'utiliser des matières actives telles que les lubrifiants pour le travail ou la déformation des matériaux.

Lorsque la matière active est un solvant ou un mélange de solvants, on met en oeuvre des solvants pas ou peu miscibles dans l'eau au sens précédemment indiqué. Parmi les solvants susceptibles d'être utilisés, on peut citer les solvants mis en oeuvre pour le nettoyage ou le décapage, tels que les coupes pétrolières aromatiques, les composés terpéniques comme le D-limonène, ou encore le L-limonène, ainsi que les solvants comme le Solvesso® (coupe pétrolière comprenant un mélange de composés aromatiques, riche en naphtalènes, commercialisé par la société EXXON). Conviennent aussi comme solvants, les esters aliphatiques, comme les esters méthyliques d'un mélange d'acides acétique, succinique et glutatique (mélange d'acides sous-produit de la synthèse du Nylon), les huiles comme l'huile de vaseline, et les solvants chlorés.

Bien évidemment, cette liste n'est donnée qu'à titre indicatif et ne saurait être exhaustive.

Les matières actives peuvent être mises en oeuvre telles quelles ou encore en présence d'un solvant organique. Plus particulièrement, ce solvant est choisi parmi les produits non solubles ou peu miscibles dans l'eau.

Par exemple, on peut mentionner les huiles minérales, les mono-, di- et triglycérides d'acides gras saturés ou insaturés ; il peut s'agir de triglycérides de synthèse ou naturels, les coupes pétrolières aromatiques, les composés terpéniques (D-limonène, L-limonène), les esters aliphatiques et les solvants chlorés.

Les granulés redispersables selon l'invention comprennent en outre au moins un tensio-actif ionique choisi parmi les acides alkylsulfoniques, les acides alkylarylsulfoniques, partiellement ou totalement salifiés, ou leurs mélanges.

Pour ces tensio-actifs, le cation est en général un métal alcalin ou alcalino-terreux, tels que le sodium, le potassium, le lithium, le magnésium, ou un groupement ammonium NR₄⁺ avec R, identiques ou différents, représentant un radical alkyle possédant 1 à 6 atomes de carbone, substitué ou non par un atome d'oxygène.

A titre d'exemple, les tensio-actifs ioniques sont choisis parmi les acides alkylsulfoniques, partiellement ou totalement salifiés, en C₈-C₅₀. Plus particulièrement, lesdits acides sont en C₈-C₃₀, et de préférence en C₁₀-C₂₂.

Les acides alkylarylsulfoniques, partiellement ou totalement salifiés, substitués par un à trois groupements alkyles en C₁-C₃₀ et/ou alcényles en C₂-C₃₀ conviennent à la présente invention. Plus particulièrement lesdits groupements alkyles sont en C₄-C₁₆, de préférence en C₆-C₁₂. Selon un mode plus particulier, les groupements alcényles sont en C₄-C₁₆, et de préférence en C₆-C₁₂.

Les acides benzène sulfoniques, partiellement ou totalement salifiés, substitués par un à trois groupements alkyles et/ou alcényles tels que précédemment décrits, sont des produits convenant à la réalisation de l'invention.

On peut mentionner comme tensio-actif convenant paticulièrement à la réalisation de l'invention, le lauryl benzène sulfonate de sodium.

Selon un mode de réalisation préféré de l'invention, on utilise des tensio-actifs choisi parmi les acides alkylarylsulfoniques, partiellement ou totalement salifiés.

Les granulés redispersables selon l'invention comprennent en outre un composé hydrosoluble. Plus particulièrement, ce composé hydrosoluble est un solide choisi parmi les sucres et leurs dérivés. Conviennent à ce titre les oses (ou monosaccharides), les osides, les polyholosides fortement dépolymérisés. On entend des composés dont la masse moléculaire en poids est plus particulièrement inférieure à 20000 g/mole.

Parmi les oses on peut mentionner les aldoses tels que le glucose, mannose, galactose et les cétoses tels que le fructose.

Les osides sont des composés qui résultent de la condensation, avec élimination d'eau, de molécules d'oses entre elles ou encore de molécules d'oses avec des molécules non glucidiques. Parmi les osides on préfère les holosides qui sont formés par la réunion de motifs exclusivement glucidiques et plus particulièrement les oligoholosides (ou oligosaccharides) qui ne comportent qu'un nombre restreint de ces motifs, c'est-à-dire un nombre en général inférieur ou égal à 10. A titre d'exemples d'oligoholosides on peut mentionner le saccharose, le lactose, la cellobiose, le maltose.

Les polyholosides (ou polysaccharides) fortement dépolymérisés convenables sont décrits par exemple dans l'ouvrage de P. ARNAUD intitulé "cours de chimie organique", GAUTHIER-VILLARS éditeurs, 1987. Plus particulièrement, on met en oeuvre des polyholosides dont la masse moléculaire en poids est plus particulièrement inférieures à 20000 g/mole.

A titre d'exemple non limitatif de polyholosides fortement dépolymérisés, on peut citer le dextran, l'amidon, la gomme xanthane et les galactomannanes tels que le guar ou la caroube. Ces polysaccharides présentent de préférence un poids de fusion supérieur à 100°C et une solubilité dans l'eau comprise entre 50 et 500 g/l.

Les granulés redispersables de la présente invention peuvent contenir en outre au moins un tensio-actif supplémentaire. Plus particulièrement, le tensio-actif supplémentaire est ionique.

Les tensio-actifs supplémentaires ioniques peuvent plus particulièrement être des agents tensio-actifs amphotères, les alkylbétaïnes, les alkyldiméthylbétaïnes, les alkylamidopropylbétaines, les alkylamide-propyldiméthylbétaines, les alkyltriméthyl-sulfobétaïnes, les dérivés d'imidazoline tels que les alkylamphoacétates, alkylampho-diacétates, alkylampho-propionates, alkyl-amphodipropionates, les alkylsultaïnes ou les alkylamidopropyl-hydroxysultaïnes, les produits de condensation d'acides gras et d'hydrolysats de protéines, les dérivés amphotères des alkylpolyamines comme l'Amphionic XL® commercialisé par Rhône-Poulenc, Ampholac 7T/X® et Ampholac 7C/X® commercialisés par Berol Nobel.

On peut de même utiliser des agents tensio-actifs supplémentaires de type anionique, tels que les sels hydrosolubles d'alkylsulfates, d'alkyléthersulfates, les alkyliséthionates et les alkyltaurates ou leurs sels, les alkylcarboxylates, les alkylsulfosuccinates ou les alkylsuccinamates, les alkylsarcosinates, les dérivés alkylés d'hydrolysats de protéines, les acylaspartates, les phosphates esters d'alkyle et/ou d'alkyléther et/ou d'alkylaryléther. Le cation est en général un métal alcalin ou alcalino-terreux, tels que le sodium, le potassium, le lithium, le magnésium, ou un groupement ammonium NR₄⁺ avec R, identiques ou différents, représentant un radical alkyle substitué ou non par un atome d'oxygène ou d'azote.

Comme cela a été indiqué auparavant, les granulés redispersables selon l'invention, présentent des teneurs élevées en matière active. Ainsi, la teneur en matière active est comprise entre 40 et 90 parties en poids dans le granulé.

Selon un mode de réalisation particulier de l'invention, la teneur en matière active est supérieure à 50 parties en poids. De préférence, cette teneur est d'au moins 70 parties en poids.

La quantité de tensio-actif ionique est comprise entre 1 et 20 parties en poids dans le granulé. De préférence, cette teneur est comprise entre 2 et 10 parties en poids.

La quantité de composé hydrosoluble est comprise entre 7 et 50 parties en poids dans le granulé. Selon une variante particulière, cette quantité est comprise entre 8 et 25 parties en poids.

Le rapport pondéral des concentrations entre le tensio-actif ionique et le composé hydrosoluble est compris entre 30 / 70 - 10 / 90.

Dans le cas où les granulés redispersables de l'invention comprennent un tensio-actif supplémentaire, le rapport pondéral des concentrations entre le tensio-actif ionique et le tensio-actif supplémentaire est compris entre 5 et 10.

Le procédé de préparation des granulés redispersables va maintenant être décrit.

Comme indiqué précédemment, le procédé consiste dans une première étape à préparer une émulsion dans l'eau, d'au moins une matière active, d'au moins un tensio-actif ionique, d'au moins un composé hydrosoluble.

L'émulsion peut aussi comprendre au moins un tensio-actif supplémentaire si un tel composé est employé.

Bien évidemment, dans le cas où des additifs sont nécessaires, on peut les ajouter lors de la formation de l'émulsion.

On peut mettre en oeuvre toutes les méthodes de préparation d'émulsions connues de l'homme du métier et qui sont décrites dans "ENCYCLOPEDIA of EMULSIONS TECHNOLOGY", volumes 1 à 3 de Paul BECHER édités par MARCEL DEKKER INC., 1983.

Ainsi, la méthode dite d'émulsification en phase directe convient à la préparation des granulés selon l'invention. Il est rappelé brièvement que cette méthode consiste à préparer un mélange contenant l'eau et le ou les tensio-actifs, y compris le composé hydrosoluble, puis à introduire la matière active sous forme liquide, sous agitation.

Une autre méthode convenable est l'émulsification par inversion de phases. Selon cette voie, on mélange la matière active avec le tensio-actif préférentiel et on introduit goutte à goutte et sous agitation, l'eau contenant les autres constituants tels que le composé hydrosoluble et éventuellement les tensio-actifs supplémentaires par exemple. A partir d'une certaine quantité d'eau introduite, il se produit une inversion de l'émulsion. On obtient alors une émulsion directe huile dans eau. On dilue ensuite l'émulsion obtenue dans l'eau de manière à obtenir une fraction volumique en phase dispersée appropriée.

On peut enfin préparer l'émulsion en mettant en oeuvre des broyeurs colloïdaux tels que MENTON GAULIN® et MICROFLUIDIZER® (MICROFLUIDICS). La granulométrie moyenne de l'émulsion est comprise entre 0,1 et 10 micromètres et préférentiellement entre 0,2 et 5 micromètres.

Selon une variante préférée de l'invention, on prépare au préalable un mélange comprenant l'eau et le composé hydrosoluble.

L'émulsification peut être réalisée à une température voisine de la température ambiante, bien que des températures plus faibles ou plus élevées soient envisageables.

La quantité de matière sèche de l'émulsion est généralement comprise entre 10 et 70 % en poids et préférentiellement entre 40 et 60% en poids.

Les teneurs respectives des divers constituants sont choisies de telle sorte que les granulés séchés présentent la composition définie auparavant.

La seconde étape du procédé de préparation selon l'invention consiste à sécher l'émulsion ainsi formulée pour obtenir des granulés.

Conviennent à ce titre la lyophilisation, qui correspond à une étape de congélation, suivie d'une étape de sublimation, ou bien encore le séchage par atomisation.

Ces modes de séchage, et plus particulièrement le dernier, sont particulièrement indiqués car ils permettent de conserver l'émulsion en l'état et d'obtenir directement des granulés.

Le séchage par pulvérisation peut s'effectuer de manière habituelle dans tout appareil connu tel que par exemple une tour d'atomisation associant une pulvérisation réalisée par une buse ou une turbine avec un courant de gaz chaud.

La température d'entrée du gaz chaud (en général de l'air), en tête de colonne, est de préférence compris entre 100 et 115°C et la température de sortie est de préférence comprise entre 55 et 65°C.

Il est à noter que des additifs, tels que les agents antimottants peuvent être incorporés aux granulés au moment de cette seconde étape de séchage. On recommande d'utiliser une charge choisie notamment parmi le carbonate de calcium, le sulfate de baryum, le kaolin, la silice, la bentonite, l'oxyde de titane, le talc, l'alumine hydratée et le sulfoaluminate de calcium.

Des exemples concrets mais non limitatifs vont maintenant être présentés.

### EXEMPLE 1

On prépare une émulsion de composition suivante :

| Composition | % poids |
|---|---|
| huile de vaseline : | 40 |
| lactose : | 8 |
| laurylbenzène sulfonate de sodium : | 2 |
| eau : | 50 |

On réalise au préalable une préémulsion à l'aide d'un ULTRA-TURRAX® (IKA) par introduction de l'huile de vaseline dans l'eau contenant le tensio-actif et l'oligosaccharide. L'émulsion est ensuite introduite dans un broyeur colloïdal de type MICROFLUIDIZER-M11OT® (MICROFLUIDICS).

La taille moyenne de l'émulsion mesurée à l'aide du granulomètre laser SYMPATEC® est de 0,5 micromètres

L'émulsion résultante est séchée au moyen d'un atomiseur de laboratoire type BUCHI®, avec une température d'entrée des gaz de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine à celle de l'émulsion de départ.

### EXEMPLE 2

On prépare une émulsion de composition suivante :

| Composition | % poids |
|---|---|
| huile de vaseline | 40 |
| laurylbenzène sulfonate de sodium | 1 |
| amidon dépolymérisé (Glucidex* ®) | 9 |
| eau | 50 |

| | |
|---|---|
| (*) le Glucidex® est commercialisé par la société ROQUETTE. | |

On réalise au préalable une préémulsion à l'aide d'un ULTRA-TURRAX® par introduction de l'huile de vaseline dans l'eau contenant le tensio-actif et l'amidon. L'émulsion est ensuite introduite dans un broyeur colloïdal de type MICROFLUIDIZER-M11OT®.

L'émulsion résultante est séchée au moyen d'un atomiseur de laboratoire type BUCHI®, avec une température d'entrée des gaz (air) de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine à celle de l'émulsion de départ.

### EXEMPLE 3

On prépare une émulsion de composition suivante :

| Composition | % poids |
|---|---|
| huile de vaseline | 40 |
| laurylbenzène sulfonate de sodium | 2 |
| dextran * | 8 |
| eau | 50 |

| | |
|---|---|
| (*) le dextran est commercialisé par la société FLUKA. Sa masse moléculaire en nombre est égale à 1200 g/mole. | |

On réalise au préalable une préémulsion à l'aide d'un ULTRA-TURRAX® par introduction de l'huile de vaseline dans l'eau contenant le tensio-actif et le dextran.

L'émulsion est ensuite introduite dans un broyeur colloïdal de type MICROFLUIDIZER-M11OT® (MICROFLUIDICS).

L'émulsion résultante est séchée au moyen d'un atomiseur de laboratoire type BUCHI®, avec une température d'entrée des gaz: (air) de 110°C.

On obtient des granulés présentant 80 % en poids d'huile.

La mise en contact des granulés avec l'eau entraîne leur dispersion spontanée et la formation d'une émulsion, qui après examen au microscope, présente une granulométrie voisine à celle de l'émulsion de départ.

## Revendications

1. Granulés redispersables dans l'eau, caractérisés en ce qu'ils comprennent :
- au moins une matière active sous forme de liquide hydrophobe,
- au moins un tensio-actif ionique choisi parmi les acides alkylsulfoniques, alkylarylsulfoniques, partiellement ou totalement salifiés, ou leurs mélanges,
- au moins un composé hydrosoluble choisi parmi les sucres et leurs dérivés.

2. Granulés selon la revendication précédente, caractérisés en ce que le tensio-actif ionique est choisi parmi les acides alkylsulfoniques, totalement ou partiellement salifiés, en C₈-C₅₀.

3. Granulés selon la revendication 1, caractérisés en ce que le tensio-actif ionique est choisi parmi les acides alkylarylsulfoniques, partiellement ou totalement salifiés, substitués par un à trois groupements alkyles en C₁-C₃₀, et/ou alcényles en C₂-C₃₀.

4. Granulés selon l'une quelconque des revendications précédentes, caractérisés en ce que le composé hydrosoluble est un solide choisi parmi les sucres et leurs dérivés.

5. Granulés selon la revendication précédente, caractérisés en ce que le composé hydrosoluble est choisi parmi les oses, les osides et les polyholosides fortement dépolymérisés.

6. Granulés selon l'une quelconque des revendications précédentes, caractérisés en ce qu'ils peuvent comprendre en outre au moins un tensio-actif supplémentaire ionique.

7. Granulés selon l'une quelconque des revendications précédentes, caractérisés en ce que la teneur en matière active est comprise entre 40 et 90 parties en poids dans le granulé.

8. Granulés selon l'une quelconque des revendications précédentes, caractérisés en ce que la teneur en tensio-actif ionique est comprise entre 1 et 20 parties en poids dans le granulé.

9. Granulés selon l'une quelconque des revendications précédentes, caractérisés en ce que la teneur en composé hydrosoluble est comprise entre 7 et 50 parties en poids dans le granulé.

10. Granulés selon l'une quelconque des revendications précédentes, caractérisés en ce que le rapport pondéral des concentrations entre le tensio-actif ionique et le composé hydrosoluble est compris entre 30 / 70 et 10 / 90.

11. Granulés selon l'une quelconque des revendications précédentes, caractérisés en ce que le rapport pondéral des concentrations entre le tensio-actif ionique et le tensio-actif supplémentaire est compris entre 5 et 10.

12. Procédé de préparation des granulés redispersables dans l'eau tels que définis à l'une quelconque des revendications 1 à 11, caractérisé en ce que l'on effectue les étapes suivantes :
- on prépare une émulsion dans l'eau d'au moins une matière active, d'au moins un tensio-actif ionique, d'au moins un composé hydrosoluble,
- on sèche l'émulsion ainsi obtenue.

13. Procédé selon la revendication précédente, caractérisé en ce que l'on prépare une émulsion comprenant 10 à 70 % en poids de matières sèches.

14. Procédé selon l'une quelconque des revendications 12 ou 13, caractérisé en ce que l'on effectue un séchage par atomisation.

## Claims

1. Water-redispersible granules, characterized in that they comprise:
• at least one active ingredient in the form of a hydrophobic liquid;
• at least one ionic surfactant selected from alkylsulphonic acids and alkylarylsulphonic acids, completely or partially in their salt form, or mixtures thereof;
• at least one water-soluble compound selected from sugars and derivatives thereof.

2. Granules according to the preceding claim, characterized in that the ionic surfactant is selected from C₈-C₅₀ alkylsulphonic acids, completely or partially in their salt form.

3. Granules according to claim 1, characterized in that the ionic surfactant is selected from alkylarylsulphonic acids, partially or completely in their salt form, substituted by one to three C₁-C₃₀ alkyl and/or C₂-C₃₀ alkenyl groups.

4. Granules according to any one of the preceding claims, characterized in that the water-soluble compound is a solid selected from sugars and derivatives thereof.

5. Granules according to the preceding claim, characterized in that the water-soluble compound is selected from oses, osides and highly depolymerised polyholosides.

6. Granules according to any one of the preceding claims, characterized in that they may also comprise at least one supplemental ionic surfactant.

7. Granules according to any one of the preceding claims, characterized in that the amount of active ingredient is in the range 40 to 90 parts by weight in the granule.

8. Granules according to any one of the preceding claims, characterized in that the amount of ionic surfactant is in the range 1 to 20 parts by weight in the granule.

9. Granules according to any one of the preceding claims, characterized in that the amount of water-soluble compound is in the range 7 to 50 parts by weight in the granule.

10. Granules according to any one of the preceding claims, characterized in that the ratio of the concentrations of the ionic surfactant to the water-soluble compound is in the range 30/70 to 10/90 by weight.

11. Granules according to any one of the preceding claims, characterized in that the ratio of the concentrations of the ionic surfactant and the supplemental surfactant is in the range 5 to 10 by weight.

12. A process for preparing water-redispersible granules as defined in any one of claims 1 to 11, characterized in that the following steps are carried out:
• an emulsion of at least one active ingredient, at least one ionic surfactant and at least one water-soluble compound is prepared in water;
• the emulsion obtained is then dried.

13. A process according to the preceding claim, characterized in that an emulsion comprising 10% to 70% by weight of dry matter is prepared.

14. A process according to claim 12 or claim 13, characterized in that drying is carried out by spraying.

## Patentansprüche

1. In Wasser wiederdispergierbare Granulate, dadurch gekennzeichnet, daß sie folgendes enthalten:
- mindestens einen Wirkstoff in Form einer hydrophoben Flüssigkeit,
- mindestens ein ionisches Tensid ausgewählt aus den teilweise oder vollständig als Salz vorliegenden Alkansulfonsäuren, Alkylarensulfonsäuren oder deren Mischungen,
- mindestens eine wasserlösliche Verbindung ausgewählt aus den Zuckern und ihren Derivaten.

2. Granulate nach dem vorangehenden Anspruch, dadurch gekennzeichnet, daß das ionische Tensid ausgewählt ist aus den teilweise oder vollständig als Salz vorliegenden C₈-C₅₀ Alkansulfonsäuren.

3. Granulate nach Anspruch 1, dadurch gekennzeichnet, daß das ionische Tensid ausgewählt wird aus den teilweise oder vollständig als Salz vorliegenden Alkylarensulfonsäuren, die durch ein bis drei C₁-C₃₀ Alkylgruppen und/oder C₂-C₃₀ Alkenylgruppen substituiert sind.

4. Granulate nach irgendeinem der vorangehenden Ansprüche, dadurch gekennzeichnet, daß die wasserlösliche Verbindung ein aus den Zuckern und ihren Derivaten ausgewählter Festkörper ist.

5. Granulate nach dem vorangehenden Anspruch, dadurch gekennzeichnet, daß die wasserlösliche Verbindung ausgewählt ist aus den Sacchariden, den Glykosiden und den stark depolymerisierten Polyholosiden.

6. Granulate nach irgendeinem der vorangehenden Ansprüche, dadurch gekennzeichnet, daß sie außerdem mindestens ein zusätzliches ionisches Tensid enthalten können.

7. Granulate nach irgendeinem der vorangehenden Ansprüche, dadurch gekennzeichnet, daß der Wirkstoffgehalt im Granulat zwischen 40 und 90 Gewichtsteilen liegt.

8. Granulate nach irgendeinem der vorangehenden Ansprüche, dadurch gekennzeichnet, daß der Gehalt an ionischem Tensid im Granulat zwischen 1 und 20 Gewichtsteilen liegt.

9. Granulate nach irgendeinem der vorangehenden Ansprüche, dadurch gekennzeichnet, daß der Gehalt an wasserlöslicher Verbindung im Granulat zwischen 7 und 50 Gewichtsteilen liegt.

10. Granulate nach irgendeinem der vorangehenden Ansprüche, dadurch gekennzeichnet, daß das Gewichtsverhältnis der Konzentrationen zwischen dem ionischen Tensid und der wasserlöslichen Verbindung zwischen 30/70 und 10/90 liegt.

11. Granulate nach irgendeinem der vorangehenden Ansprüche, dadurch gekennzeichnet, daß das Gewichtsverhältnis der Konzentrationen zwischen dem ionischen Tensid und dem zusätzlichen Tensid zwischen 5 und 10 liegt.

12. Verfahren zur Herstellung von in Wasser wiederdispergierbaren Granulaten nach irgendeinem der Ansprüche 1 bis 11, dadurch gekennzeichnet, daß man die folgenden Schritte durchführt:
- Herstellen einer wäßrigen Emulsion mit mindestens einem Wirkstoff, mindestens einem ionischen Tensid und mindestens einer wasserlöslichen Verbindung,
- Trocknen der so erhaltenen Emulsion.

13. Verfahren nach dem vorangehenden Anspruch, dadurch gekennzeichnet, daß man eine Emulsion herstellt, die 10 bis 70 Gew.-% Trockensubstanz enthält.

14. Verfahren nach irgendeinem der Ansprüche 12 oder 13, dadurch gekennzeichnet, daß man eine Sprühtrocknung durchführt.
